# EUROPEAN PATENT APPLICATION

(11) **EP 0 936 133 A1**
(43) Date of publication of application: **18.08.1999**
(21) Application number: 99200402.8
(22) Date of filing: 11.02.1999
(51) Int. Cl.: B62D 65/00, B62D 47/00

(54) **Method for building a relatively compact vehicle and passenger vehicle**

(30) Priority: 13.02.1998 NL 1008308
(71) Applicant: C.A.B. Voertuigtechniek N.V., 3506 GH Utrecht (NL)
(72) Inventor: Baart, Henricus Jacobus Maria, 4708 LW Roosendaal (NL); Haverkamp, Hendrikus, 6881 WG Velp (NL); van der Heijden, Arnoldus Maria Antonius, 2821 TC Stolwijk (NL); van der Linden, Jacobus Wilhelmus Petrus Maria, 5623 EP Eindhoven (NL)
(74) Representative: Land, Addick Adrianus Gosling

(57) **Abstract**

The present invention relates to a method for building a relatively compact vehicle, for instance for passenger transport, comprising the following steps of:
- removing the chassis from an existing vehicle with driver's seat, chassis and rear wheel suspension, this from a position behind the driver's seat in order to form a front part;
- arranging pneumatic suspension for the front wheels;
- arranging on the front part a lowered chassis with pneumatic suspension for the rear wheels; and
- building a bodywork using plastic panels.

## Description

There is an increasing need for compact vehicles for passenger transport, for instance in inner cities where comparatively little space is available and wherein the public must be transported continuously from parking accommodation to a shopping area, and for instance transport for the elderly and the like. In addition to personnel costs for drivers, it is expensive to build such compact vehicles in relatively small series.

The present invention provides a method for building a relatively compact vehicle, for instance for passenger transport, comprising the following steps of:
- removing the chassis from an existing vehicle with driver's seat, chassis and rear wheel suspension, this from a position behind the driver's seat in order to form a front part;
- arranging pneumatic suspension for the front wheels;
- arranging on the front part a lowered chassis with pneumatic suspension for the rear wheels; and
- building a bodywork using plastic panels.

The lowered chassis is preferably welded on one side and bolted on one side, preferably using specially formed coupling elements.

The present invention further provides a vehicle manufactured using the method according to the present invention, wherein the height of the chassis and the bodywork constructed thereon can be adjusted between a high and a low position.

In a further preferred embodiment use is made of plastic panels of standardized dimensions in order to facilitate building of vehicles of different lengths and to further reduce costs.

Use is made of pneumatic suspension, which ensures a high level of comfort for the passengers to be transported, and wherein the height of the chassis relative to the road surface, and therefore the curb, is adjustable between for instance a high position of 320 mm and a low position of 250 mm relative to the road surface. In the existing vehicle used as starting point the floor height amounted to 540 mm relative to the road surface.

The pneumatic spring elements are preferably embodied such that, just as the coil spring elements to be replaced, they can be arranged obliquely under the vehicle, while the same steering of the front wheels remains ensured, this being important in inner cities and the like.

Finally, the present invention provides such a pneumatic spring element for use in a vehicle according to the present invention.

Further advantages, features and details of the present invention will be elucidated on the basis of the following description of a preferred embodiment thereof with reference to the annexed drawings, in which:
fig. 1 shows a view in perspective of a vehicle according to the present invention;
fig. 2 shows a view in perspective of a chassis for a vehicle according to the present invention;
fig. 3 shows a front view in perspective of the chassis of fig. 2;
fig. 4 is a view in perspective of the chassis of fig. 2 in a second position;
fig. 5 is a front view in perspective of the chassis of fig. 4;
fig. 6 is a view in perspective of detail VI of fig. 4;
fig. 7 is a cross-sectional view of detail VII of fig. 2.

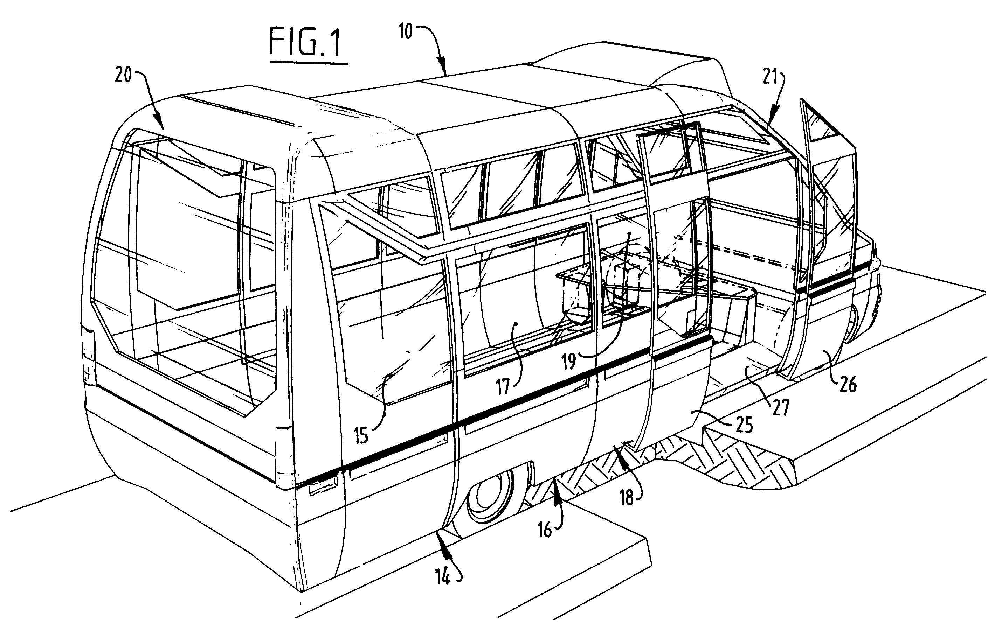

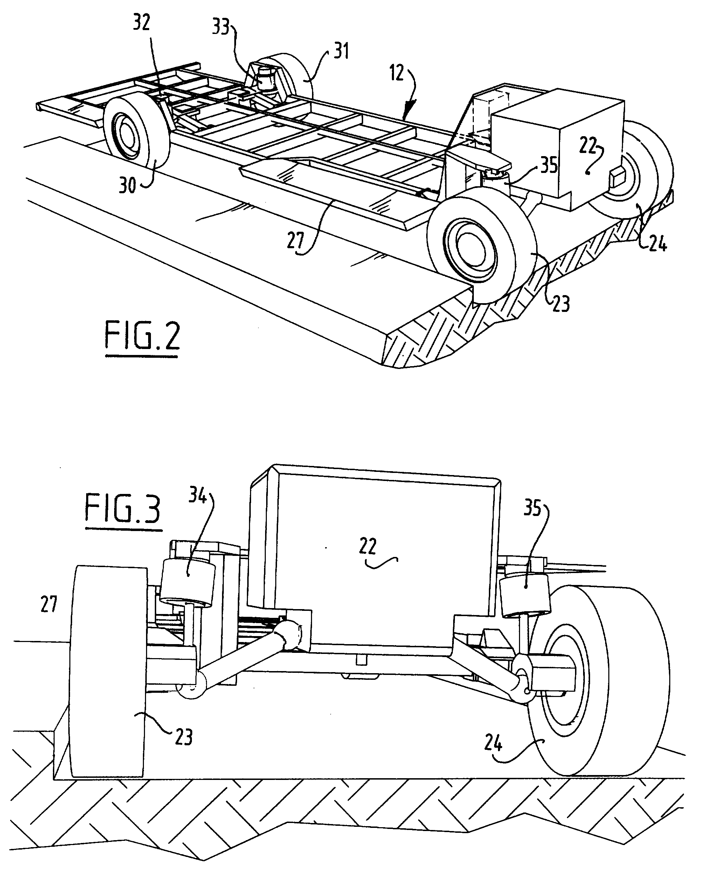

A vehicle 10 (fig. 1) comprises a chassis 12 (see also fig. 2) having mounted thereon panels 14, 16, 18 which are as far as possible of standardized dimensions and in which are arranged respective windows 15, 17 and 19, and a rear part 20, which are preferably all manufactured from plastic and together form the outer wall of the cabin which is closed at the bottom by a floor plate (not shown) and at the top by a roof. In a front part 21 is situated a seat for the driver and a drive system 22 as designated schematically in fig. 2 and comprising for instance an engine and gearing for driving wheels 23 and 24. Opposite the driver's cab are situated access doors 25 and 26 behind which extends a lowered footboard 27.

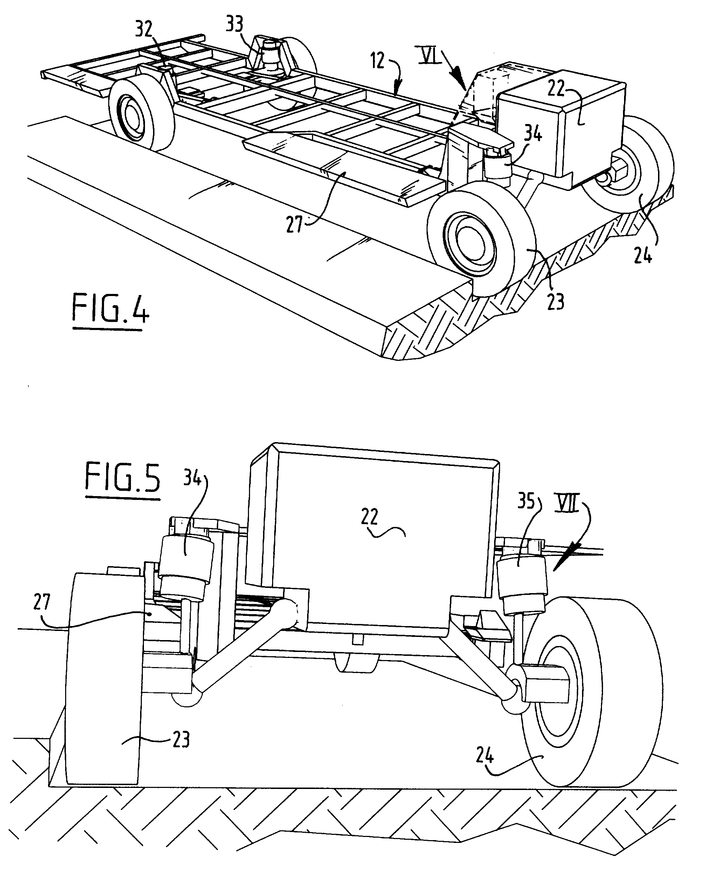

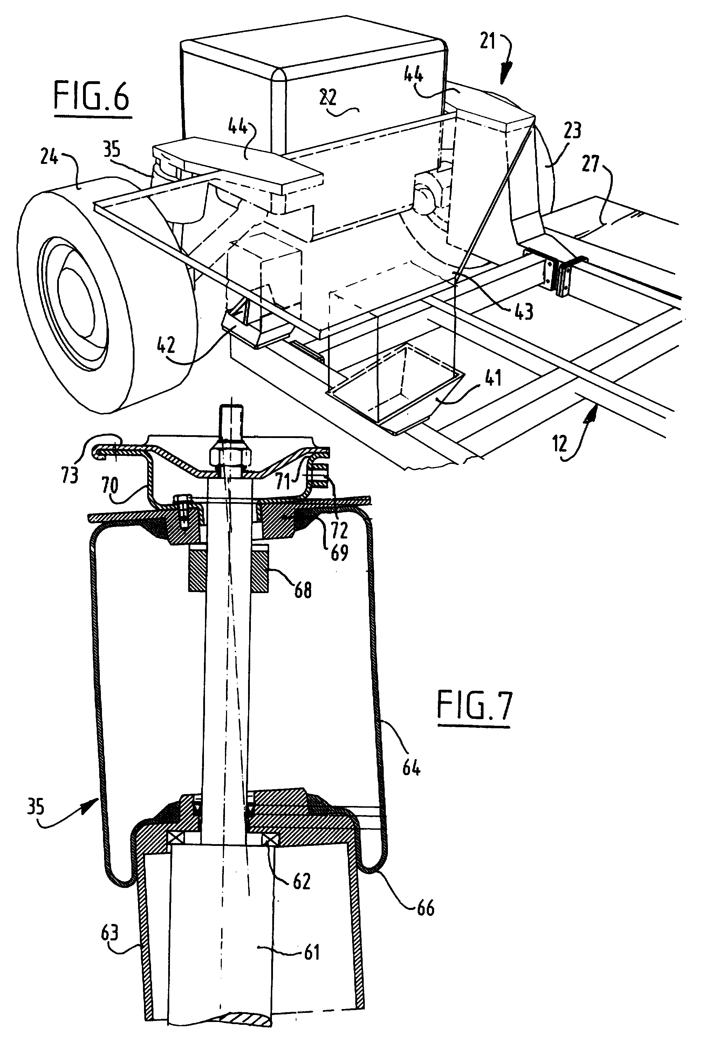

As shown particularly in fig. 2-5, front wheels 23 and 24 and rear wheels 30 and 31 are spring-mounted on chassis 12 by pneumatic springs 32, 33, 34 and 35. A comfortable journey is thus provided for the persons present in the vehicle during travel, while it is likewise possible for embarking and disembarking to lower the chassis relative to the wheels, and therefore the road surface, so-called kneeling. Fig 2 and 3 show the low position, while fig. 4 and 5 illustrate the high position which is assumed during travel.

The vehicle according to the present invention is manufactured by acquiring an existing vehicle (without a construction for a passenger compartment) with driver's seat and drive, and by subsequently fixing a lowered chassis thereto; in the present embodiment a Peugeot Boxer. The lowered chassis 12 is bolted via flanges to the front part 21 on the side of footboard 29. On the side of the driver's seat the chassis 12 is welded and bolted to a bottom plate 43 of the front part 21 via specially formed coupling elements 41 and 42.

An existing standard vehicle is generally provided at the front wheels with coil springs which in the vehicle according to the present invention are replaced by specially constructed pneumatic spring elements, of which element 35 is visible in fig. 6. Just as such a coil spring element, the pneumatic spring element 35 lies obliquely under a chassis part 44 of the front part 21 and is constructed such that it does not occupy (much) more space than the corresponding coil spring so as not to impede steering and drive of the front wheels in the high position.

Pneumatic spring element 35 (fig. 6) is arranged on a spring leg 61 with a bearing 62 whereby a sleeve 63 is mounted on spring leg 61. An air bellows 64 is fixed in airtight manner to sleeve 63 which is likewise fixed in airtight manner via a double seal 65. Cheek 66 of the bellows can as it were roll down along the outside of sleeve 63, whereby the bellows takes up little space in the shown intermediate position and in high and low position. Further provided is a stop 68 which bounds the movement of the upper mounting flange 69 to which bellows 64 is fixed. Arranged on element 69 is a cup-shaped element 70 in which is situated a connecting stub 72 for supply of air into an air bellows 64. On the upper side the cup-shaped element 70 is arranged on a dish 73 which corresponds with a dish of the acquired vehicle from which the vehicle according to the present embodiment is derived.

Owing to the above described construction the pneumatic spring element 35 can be placed in the location of a coil spring while a limited wheel deflection which could impede steering of the vehicle in both high and low positions is prevented.

The present invention is not limited to the above described preferred embodiment; the rights sought are defined by the following claims, within the scope of which many modifications can be envisaged.

## Claims

1. Method for building a relatively compact vehicle, for instance for passenger transport, comprising the following steps of:
- removing the chassis from an existing vehicle with driver's seat, chassis and rear wheel suspension, this from a position behind the driver's seat in order to form a front part;
- arranging pneumatic suspension for the front wheels;
- arranging on the front part a lowered chassis with pneumatic suspension for the rear wheels; and
- building a bodywork using plastic panels.

2. Method as claimed in claim 1, wherein the lowered chassis is welded to the front part.

3. Method as claimed in claim 1 or 2, wherein the lowered chassis is bolted to the front part.

4. Vehicle manufactured using the method as claimed in claim 1, 2 or 3, wherein the height of the chassis and the bodywork constructed thereon is adjustable between a high and a low position.

5. Vehicle as claimed in claim 4, wherein at least a number of the plastic panels have standardized dimensions.

6. Vehicle as claimed in claim 4 or 5, provided with pneumatic spring elements disposed slightly obliquely on the respective front wheels.

7. Vehicle as claimed in claim 6, wherein the pneumatic spring element is provided on the top and bottom with components corresponding with those of d similar coil spring element.

8. Vehicle as claimed in claim 6 or 7, wherein in a low position an air bellows of the pneumatic spring element connects close-fittingly onto a sleeve of that pneumatic spring element.

9. Pneumatic spring element evidently suitable for a vehicle as claimed in any of the claims 4-8.
